Europäisches Patentamt

European Patent Office

Office européen des brevets

(11) Veröffentlichungsnummer: **0 562 346 A1**

# EUROPÄISCHE PATENTANMELDUNG

(21) Anmeldenummer: **93103718.8**

(22) Anmeldetag: **09.03.93**

(51) Int. Cl.5: **B26F 3/00**, B23K 26/08, B23K 26/00, B65H 19/26

(30) Priorität: **25.03.92 DE 4209630**

(43) Veröffentlichungstag der Anmeldung: **29.09.93 Patentblatt 93/39**

(84) Benannte Vertragsstaaten: **DE GB LU**

(71) Anmelder: **BASF Aktiengesellschaft Carl-Bosch-Strasse 38 D-67063 Ludwigshafen(DE)**

(72) Erfinder: **Zimmermann, Clifton, Dr. Insterburgstrasse 4b W-7500 Karlsruhe 1(DE)**
Erfinder: **Kuerten, Heribert, Dr. Olbergstrasse 29 W-6730 Neustadt(DE)**

(54) **Verfahren und Vorrichtung zum Trennen einer Warenbahn.**

(57) Das Trennen einer laufenden Warenbahn (1) nach Erreichen der aufgewickelten Solllänge erfolgt durch bruchmechanische Rißausbreitung, ausgehend von Perforationsschnitten, die mittels einer Laserapparatur (9-11) in das durch Kühlung (8) versprödete Bahnmaterial an der Trennstelle eingebracht werden.

EP 0 562 346 A1

Die Erfindung betrifft ein Verfahren und eine Vorrichtung zum Trennen einer laufenden Warenbahn, mit einer Abtriebseinrichtung und einer Zugspannung erzeugenden Antriebseinrichtung für die Warenbahn und Führungsrollen dazwischen.

Bisher war es üblich, eine fortlaufende Warenbahn mit Hilfe eines mechanisch angetriebenen Schlagmessers zu durchtrennen. Dabei wurde der Anfang der abgetrennten Warenbahn an einen neuen, bereits rotierenden Kern angelegt. Der Eingriff des Schlagmessers in die Warenbahn bewirkt dabei eine lokale Warenbahnauslenkung, die zu Biegeschwingungen der neu entstandenen Bahnenden führt. Dies bereitet beim Anlegen des Bahnanfangs an den neuen Kern Schwierigkeiten, wobei es leicht zu Faltenbildungen kommt. Des weiteren bereitet die rechtzeitige Einbringung des Messers bei hohen Bahngeschwindigkeiten zunehmend Schwierigkeiten.

Es war daher die Aufgabe zu lösen, ein Verfahren und eine Vorrichtung zum Trennen einer laufenden Warenbahn zu entwickeln, bei denen eine Beeinträchtigung der Warenbahn und des Warenbahnlaufs ausgeschlossen ist, d.h. der mechanische Schnitt vermieden wird.

Das die Aufgabe lösende Verfahren besteht darin, daß die Warenbahn an der zu trennenden Stelle quer zur Laufrichtung versprödet wird, in die versprödete Trennstelle mehrere Perforationsschnitte derart eingebracht werden, daß die Zugspannung in der Warenbahn genügt, um von den Perforationsschnitten ausgehende, sich schnell ausbreitende Risse auszulösen.

Die Vorrichtung zur Durchführung des Verfahrens ist in der eingangs geschilderten Art aufgebaut und weist erfindungsgemäß eine über die Breite der Warenbahn sich erstreckende Dusenanordnung, die mit einer Kühlmediumquelle verbindbar ist, und eine Laserlichtquelle auf, deren Licht mittels mindestens einer Fokusieroptik an der von der Düsenanordnung beaufschlagbaren Stelle auf die Warenbahn fokusierbar ist.

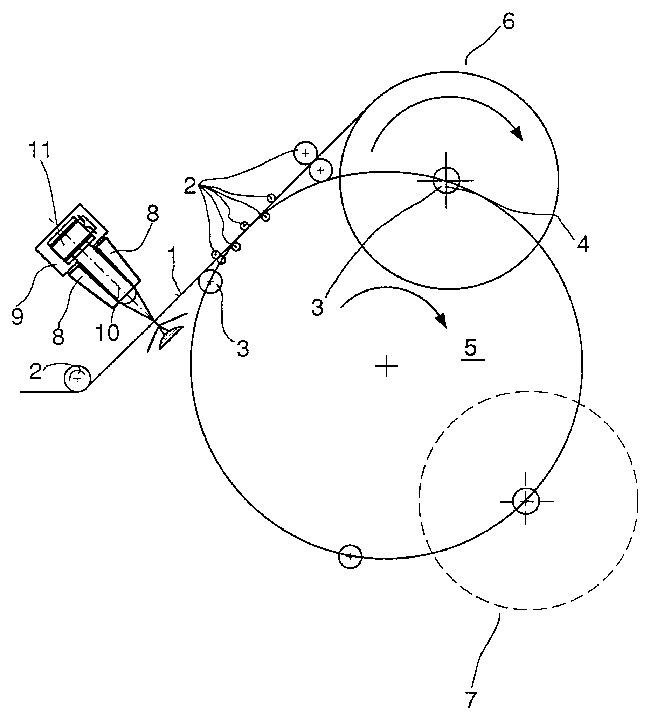

Das Verfahren und die Vorrichtung nach der Erfindung sind anhand eines in der Zeichnung schematisch dargestellten Ausführungsbeispiels nachfolgend im einzelnen beschrieben.

Eine kontinuierlich produzierte Warenbahn 1 wird über Umlenk- und Führungsrollen 2 einem Wickelkern 3 zugeführt, der von einem Elektromotor 4 ausgetrieben wird und als Antriebseinrichtung für die Warenbahn dient. Hat die auf dem Kern aufgewickelte Warenbahn ihre Solllänge erreicht, wird sie getrennt und der dabei entstandene neue Bahnanfang auf einen neuen, bereits auf die Geschwindigkeit der Warenbahn gebrachten Wickelkern haftend angelegt. Die Haftung kann durch Anfeuchten der Warenbahn oder mittels elektrostatischer Ladungen erreicht werden. Sie kann ebenso durch Erwärmen der Wickelkernoberfläche unterstützt werden.

Für einen reibungslosen Ablauf des Wickelkernwechsels ist es zweckmäßig, den neuen Wickelkern bereits während des Aufwickelvorgangs des vorhergehenden Kerns im Transportweg der Warenbahn anzuordnen. Hierzu eignet sich vorteilhaft ein schrittweise drehbarer Rundtisch 5, auf dem mehrere, motorisch antreibbare Wickelkerne 3 so angeordnet sind, daß in jeder Arbeitsstellung des Rundtischs der nächstfolgende Wickelkern der Warenbahn zumindest dicht benachbart ist. Nach dem Trennen der Warenbahn und dem Anlegen des neuen Bahnanfangs am nächstfolgenden Wickelkern dreht der Rundtisch einen Schritt weiter, so daß der neu belegte Wickelkern in die Aufwickelposition 6 und der bewickelte Kern in die Entnahmeposition 7 gelangen.

Das Trennen der Warenbahn 1 unmittelbar vor Erreichen des neuen Wickelkerns erfolgt gemäß der Erfindung nach bruchmechanischen Prinzipien, indem die Warenbahn an der zu trennenden Stelle quer zur Laufrichtung versprödet wird, in die versprödete Trennstelle mehrere Perforationsschnitte so eingebracht werden, daß die mittels des aufwickelnden Kerns 3 erzeugte Zugspannung $\sigma$ in der Warenbahn genügt, um von den Perforationsschnitten ausgehende, sich schnell ausbreitende Sprödbrüche bzw. Risse auszulösen. Bei gegebener Zugspannung $\sigma$ ergibt sich die hierfür erforderliche (Gesamt-)Perforationsschnittlänge a gemäß der bruchmechanischen Beziehung

$$K_{IC} = \sigma \sqrt{2\pi a}$$

wobei $K_{IC}$ der Spannungsintensitätsfaktor, eine Materialkonstante der Warenbahn, und a die Länge der Perforationsschnitte ist.

Die Rißausbreitung erfolgt immer senkrecht zur Zugspannung, d.h. Warenbahnrichtung, wobei die Risse innerhalb weniger Millimeter ihre materialspezifische Endgeschwindigkeit erreichen. Diese liegt oberhalb der Versprödungstemperatur, also im plastischen Bereich, bei metallischen bzw. organisch synthetischen Stoffen bei einigen 10 m/sec. Unterhalb der Versprödungstemperatur, im spröden Bereich, erreichen die Risse die Raleighwellengeschwindigkeit, bei den o.g. Stoffen ca. 1000 - 1500 m/s.

Das Verspröden des Bahnmaterials an der Trennstelle wird mittels eines Strahls aus verflüssigtem Gas, vorzugsweise Stickstoff, vorgenommen, welcher aus einer über die Breite der Warenbahn 1 sich erstreckenden Düse 8 austritt. Die Austrittsdauer ist kurz bemessen, so daß nur ein schmaler Streifen um die zu trennende Stelle versprödet wird.

Das Einbringen der Perforationsschnitte in die versprödete Trennstelle wird mit Hilfe eines Lasers 9 vorgenommen, dessen Licht mittels mehrerer, über die Warenbahnbreite verteilter Fokusieroptiken 10 auf die Warenbahn fokusiert wird. Das Laserlicht aus dem Laser 9 wird dabei über einen rotierenden Polygonspiegel 11 auf die einzelnen Optiken 10 gelenkt.

Eine vorteilhafte Ausgestaltung der vorstehend beschriebenen Trenneinrichtung besteht darin, daß die Fokusieroptiken 10 von zwei Düsen 8 eingeschlossen sind.

Die Schnittkante eines Sprödbruches besitzt gegenüber mechanisch vorgenommenen Schnitten eine überragende Qualität bei gleichzeitig sehr hoher Trenngeschwindigkeit. Eine 1 m breite Warenbahn wird in < 1 ms getrennt. Dabei wirken keine externen mechanischen Kräfte. Die Materialtrennung wird vielmehr aus dem Zugspannungsfeld der Warenbahn gespeist, so daß keine Biegewellen entstehen. Ferner bewirkt die Abkühlung der Warenbahn im Trennbereich, daß die Schnittenden steif sind; Falten sind daher nicht möglich.

Liegt die Versprödungstemperatur des Materials unterhalb von 0°C und wurde das Material entsprechend tief abgekühlt, so wird sich an den Schnittenden sehr schnell Feuchtigkeit aus der Atmosphäre als Eisschicht niederschlagen. Gelangt das so beschichtete Ende auf den neuen, gegebenenfalls angewärmten Wickelkern, so wirkt die dort auftauende Eisschicht als Kleber. Zusätzliche Haftvermittler wären in diesem Falle unnötig.

**Patentansprüche**

1. Verfahren zum Trennen einer laufenden Warenbahn, dadurch gekennzeichnet, daß die Warenbahn an der zu trennenden Stelle quer zur Laufrichtung versprödet wird, in die versprödete Trennstelle mehrere Perforationsschnitte derart eingebracht werden, daß die Zugspannung in der Warenbahn genügt, um von den Perforationsschnitten ausgehende, sich schnell ausbreitende Risse auszulösen.

2. Vorrichtung zur Durchführung des Verfahrens nach Anspruch 1, mit einer Abtriebseinrichtung und einer Zugspannung erzeugenden Antriebseinrichtung (3,4) für die Warenbahn (1) und Führungsrollen (2) dazwischen, gekennzeichnet durch eine über die Breite der Warenbahn (1) sich erstreckende Düsenanordnung (8), die mit einer Kühlmediumquelle verbindbar ist, und eine Laserlichtquelle (9), deren Licht mittels mindestens einer Optik (10) an der von der Düsenanordnung beaufschlagten Stelle oder kurz dahinter auf die Warenbahn fokusiert ist.

3. Vorrichtung nach Anspruch 2, dadurch gekennzeichnet, daß mehrere, über die Warenbahnbreite verteilte Fokusieroptiken (10) vorgesehen sind, die mittels eines rotierbaren Polygonspiegels (11) nacheinander vom Laserlicht baufschlagbar sind.

4. Vorrichtung nach Anspruch 2 und 3, dadurch gekennzeichnet, daß die Antriebseinrichtung ein von mehreren, motorisch antreibbaren Wickelkernen (3) ist, die auf einem schrittweise drehbaren Rundtisch (5) derart angeordnet sind, daß in jeder Arbeitsstellung des Rundtischs zwischen der Laseranordnung (9-11) und dem aufwickelnden Kern (3,6) ein weiterer Wickelkern (3) die Warenbahn (1) berührt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 666 151 (DU PONT OF CANADA) --- | 1,2 | B26F3/00 B23K26/08 |
| A | US-A-3 782 650 (EGAN MACHINERY) * das ganze Dokument * --- | 1,2 | B23K26/00 B65H19/26 |
| A | US-A-2 681 771 (BLACK-CLAWSON COMP.) --- | | |
| A | FR-A-2 375 964 (BINGLEY) ----- | | |

**RECHERCHIERTE SACHGEBIETE (Int. Cl.5)**

B26F
B26D
B23K
B65H

Der vorliegende Recherchenbericht wurde für alle Patentansprüche erstellt

| Recherchenort | Abschlußdatum der Recherche | Prüfer |
|---|---|---|
| DEN HAAG | 30 JUNI 1993 | RIS M. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument